# EUROPEAN PATENT APPLICATION

(11) **EP 3 243 381 A1**
(43) Date of publication of application: **15.11.2017**
(21) Application number: 16169068.0
(22) Date of filing: 10.05.2016
(51) Int. Cl.: A01K 63/00, A01K 63/02, B65D 85/50, B65D 85/52

(54) **A CONTAINER FOR TRANSPORTING LIVESTOCK FOR AN AQUARIUM**

(71) Applicant: An Fheirm Choireil Teoranta, Co. Galway Recess (IE)
(72) Inventor: KILROY, Simon, Dublin, Co. Dublin (IE)
(74) Representative: Carmody, Mark

(57) **Abstract**

A container (1) for storing and transporting livestock (50), the container (1) comprising a body member(2) having a closed end (3) and an open end (4), an outer diameter (11) and an inner diameter (12); a base (20) comprising a top end (22) and a bottom end (24) configured to matingly engage with the body member (2); and an insert (30) adapted to be secured to the base (20); wherein the insert (30) acts as an anchor for livestock (50) to avoid movement and damage during storage and transport.

## Description

### Field of the Invention

The present invention relates to a container suitable for shipping live corals, fish, invertebrates and plants for the ornamental aquarium trade; and a stacking container suitable for shipping a plurality of the containers.

### Background

Live corals and fish are shipped around the world from collectors' facilities and farms to wholesalers. These wholesalers then reship these live items from their holding facilities on to retailers.

Traditional and current transport methodologies are centred on the bag-and-air method, and are literally as they suggest. Individual live items are placed in a plastic bag with water filled with air (and tied to a piece of Styrofoam® by a piece of string or fishing line in the case of a coral fragment so that they float), and then placed in an insulated box. This offers little by way of support to the animals inside and physical damage is the norm and accepted by the industry.

Other methods that have been used include shipping pieces of coral in a relatively dry or damp environments.

There is therefore a need to provide an improved shipping method or means for transporting live aquatic animals. It is an object of the present invention to overcome at least some of the above-mentioned problems.

### Summary of the Invention

According to the present invention there is provided, as set out in the appended claims, a container (1) for storing and transporting livestock (50), the container (1) comprising:
a body member (2) having a closed end (3) and an open end (4), an outer diameter (11a, 11b) and an inner diameter (12);
a base (20) comprising a top end (22), a bottom end (24) and a side wall (23) configured to matingly engage with the body member (2); and
an insert (30) adapted to be secured to the base (20); wherein the insert (30) acts as an anchor for livestock (50) in the container (1).

In one embodiment, the open end (4) further comprises a flange (5) and a threaded section (6) adapted to matingly engage with the base (20).

In one embodiment, the bottom end (24) further comprises at last one strut (25) radiating out from an inner wall (23b) of a recess (18) in the bottom end (24). Preferably, the strut (25) is adapted to engage with the top end (3) of a container (1).

In one embodiment, the base (20) further comprises a threaded section (21) adapted to matingly engage with the body member (2).

In one embodiment, the base (20) further comprises an anchoring platform (28) and at least one fixing point (29) configured to secure the insert (30) in place. Preferably, the anchoring platform (28) is defined by a space (19) enclosed by an inner wall (23a) having a lip (26). Preferably, the at least one fixing point (29) is positioned within the space (19).

In one embodiment, the base (20) further comprises a moat (27) defined by an area situated between the side wall (23) and the inner wall (23a).

Ideally, the moat (27) cooperates with the flange (5) of the body member (2).

In one embodiment, the insert (30) comprises a stage (31) having at least one aperture (36), at least one snap (32) and a central fixing means (34). Preferably, the central fixing means (34) and the at least one snap (32) are configured to engage with a holder (60). More preferably, the holder (60) is adapted to secure the livestock (50) in the container (1).

In one embodiment, an outer diameter (42) of the base (20) is less than the outer diameter (11b) of the body member (2).

In one embodiment, an outer diameter (42) of the base (20) is greater than the outer diameter (11b) of the body member (2).

In one embodiment, the livestock (50) is selected from fish, coral, invertebrates, marine plants, brackish plants, freshwater plants that are suitable for culturing in an aquarium.

In the specification, the term "container" should be understood to mean a receptacle that is suitable for storing and protecting livestock while in storage, and being delivered and transported to a destination.

In the specification, the term "stacking container" should be understood to mean a container which is suitable for holding and containing a plurality of the containers of the invention. The stacking container is configured to accommodate the containers such that they are stored and transported safely, preventing them from being damaged during transport and maintains the containers in an upright position.

In the specification, the term "coral" should be understood to mean marine invertebrates in the class Anthozoa of phylum Cnidaria. They typically live in compact colonies of many identical individual polyps. They are found in tropical and cold-water environments.

In the specification, the term "live coral" should be understood to mean coral that are alive and ready for transplantation to a new aquarium.

In the specification, the term "livestock" should be understood to mean fish, coral, invertebrates, marine plants, brackish plants, freshwater plants, and the like, that are suitable for culturing in an aquarium.

In the specification, the term "livestock solution" should be understood to mean the solution within which the livestock can survive transport in, for example, sea water, fresh water, nutrient rich solution.

In the specification, the term "fish" should be understood to mean marine fish and freshwater fish that are suitable for cultivation in commercial and hobbyist-type aquariums.

In the specification, the term "invertebrates" should be understood to mean animals without a backbone, that are commonly kept in freshwater and marine aquaria by hobby aquarists. Some species are intentionally collected for their desirable aesthetic characteristics. Others are kept to serve a functional role such as consuming algae in the aquarium. Some species are present only incidentally or are pest species. Numerous shrimp species, crayfish, freshwater snail species, and at least one freshwater clam species are found in freshwater aquaria. In marine aquaria, invertebrates such as Arthropods, Echinoderms, jellyfish, Molluscs, Sea Anemones, Sponges, and Tunicates can be found.

In the specification, the term "snap(s)" should be understood to mean, as per the industry standard ("The First Snap-Fit Handbook", 1st Edition, (P. Bonenberger) (2000)) a mechanical joint system where part-to-part attachment is accomplished with locating and locking features (constraint features) that are homogenous with one or the other of the components being joined. Joining requires the (flexible) locking features to move aside for engagement with the mating part, followed by return of the locking feature toward its original position to accomplish the interference required to latch the components together. Locator features, the second type of constraint feature, are inflexible, providing strength and stability in the attachment. Enhancements complete the snap-fit system, adding robustness and user-friendliness to the attachment. The commonest form of snaps are annular (circular connectors), cantilever (hook and recess), and torsional (a latch is attached to a torsion bar or shaft). Snap fits are commonly used as an assembly method for injection moulded parts. The snaps are moulded into the product, so additional parts are not needed to join them together. Additionally, if designed correctly, they can be disassembled and reassembled several times without any problems. A snap fit can either be designed as a permanent snap or a multiple snap. Permanent fits are used in disposable parts that are never meant to be disassembled. Multiple snaps are used in most designs where disassembly for service is expected.

The body member described herein may be thermoformed as a single part, consisting of two main elements: 1) a rigid circular flange and 2) a hollow body, which covers the livestock when *in situ.*

In one embodiment, the material of construction is suitably a durable yet rigid material, for example polypropylene, polyethylene (PE), polyethylene terephthalate copolymer (PETG), amorphous polyethylene terephthalate (APET) combined with the thin wall thickness of between about 0.05mm to about 2.0 mm, preferably about 0.1 mm to about 1.0 mm, more preferably between about 0.25 mm and 0.75 mm, and ideally about 0.5mm along the body member allows it to be flexible so it can withstand changes in pressure during transport by air freight with commercial airline companies.

The container of the invention is a protective and cost effective means to allow for corals and fish to be transported safely. The use of the container reduces stress and damage often caused by using plastic bags. This increases the long term survival rates of the live products been shipped. The container is constructed of a rigid material and is designed to stack inside a shipping box.

The container of the invention consists of a (optionally, a tubular) body member which can be constructed from a range of rigid or semi-rigid materials. This body attaches to a base which also can be made of assorted materials. The base has an insert which attaches to it and has a fixing means and a plurality of (four) snaps to allow for the attachment of live corals or plants.

The container has many advantages over common practice methods, such as the bag-and-air method. By holding the items (livestock) being shipped in place, physical breakage and damage normally caused by abrasion on the bag sides during shipping is avoided. Also, the container does not collapse like plastic bags, so avoiding damage. The container and its stacking container makes packing orders for delivery faster and so reducing labour costs. The container can also be made from recycled material and is itself recyclable. Additional information can be added to the canister depending on the end user, such as species type, acclimatisation guidelines and general care.

### Brief description of drawings

The invention will be more clearly understood from the following description of an embodiment thereof, given by way of example only, with reference to the accompanying drawings, in which:
**Figure 1A** illustrates a perspective view of a container of the invention with a piece of coral positioned *in situ* and ready for transport, while **Figure 1B** illustrates an exploded view of Figure 1A.
**Figure 2A-E** illustrates a plan (A), side (B), bottom (C), sectional (D) and isometric (E) views of a body member of the container of the invention.
**Figure 3A-E** illustrates a plan (A), side (B), bottom (C), sectional (D) and isometric (E) views of a base of the container of the invention.
**Figure 4A-F** illustrates a side (A), plan (B), sectional A-A (C), sectional C-C (D), detail B from view (D) and isometric (F) views of an insert for the base of the container of the invention.
**Figure 5A-D** illustrates a plan (A), side (B), sectional (C), detail B from view (C) and exploded (E) views of the insert positioned in the base of the container of the invention.
**Figure 6** illustrates a stacking container of the invention with a plurality of containers as illustrated in Figure 1 positioned therein.
**Figure 7A** illustrates a perspective view of a container of the invention with a piece of coral positioned in situ and ready for transport, while **Figure 7B** illustrates a stacking container of the invention with a plurality of containers as illustrated in Figure 7A positioned therein.
**Figure 8A** illustrates a perspective view of a container of the invention with a piece of coral positioned in situ and ready for transport, while **Figure 8B** illustrates a stacking container of the invention with a plurality of containers as illustrated in Figure 7A positioned therein.

### Detailed Description

The container of the invention is a protective and cost-effective means to allow for corals and fish to be transported safely. The use of the container reduces stress and damage often caused by using plastic bags. This increases the long term survival rates of the live products been shipped. The container is constructed of a rigid material and is designed to stack inside a shipping box.

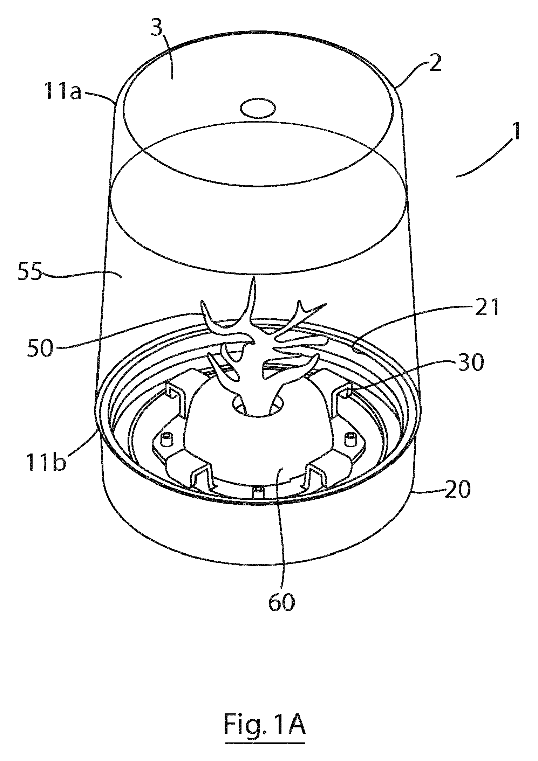

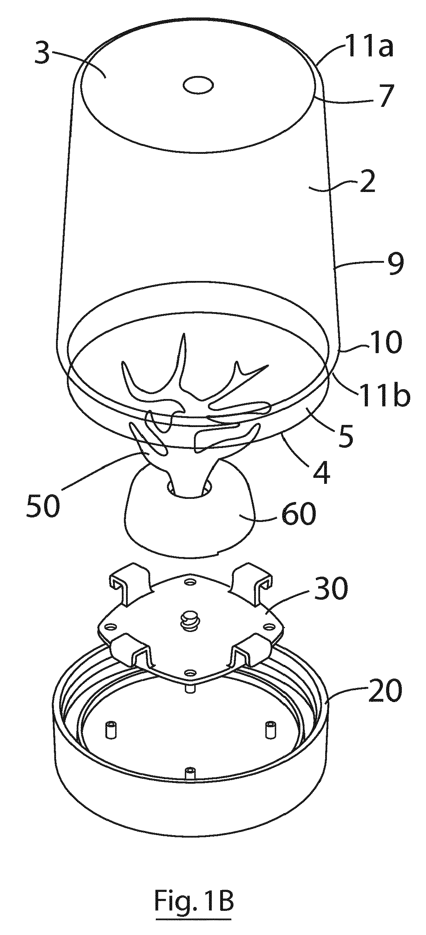

Referring now to the figures, where **Figure 1A** illustrates a general embodiment of a container of the present invention. Specifically, **Figure 1A** illustrates a perspective view of a container of the present invention in use with a piece of coral positioned *in situ* therein, and is generally referred to by reference numeral 1. The container 1 of the illustrated embodiment comprises a body member 2 having a closed end 3 and an open end 4. The open end 4 is connected to a base 20, having an insert 30 attached thereto. The body member 2 is placed over the insert 30 and reversibly engages with the base 20 via threaded sections 6 and 21, respectively. The insert 30 is depicted having a livestock 50 *in situ,* in this case a piece of coral, via a holder 60. The container 1 is also depicted with a transport solution 55 covering the livestock 50. **Figure 1B** illustrates an exploded view of Figure 1A.

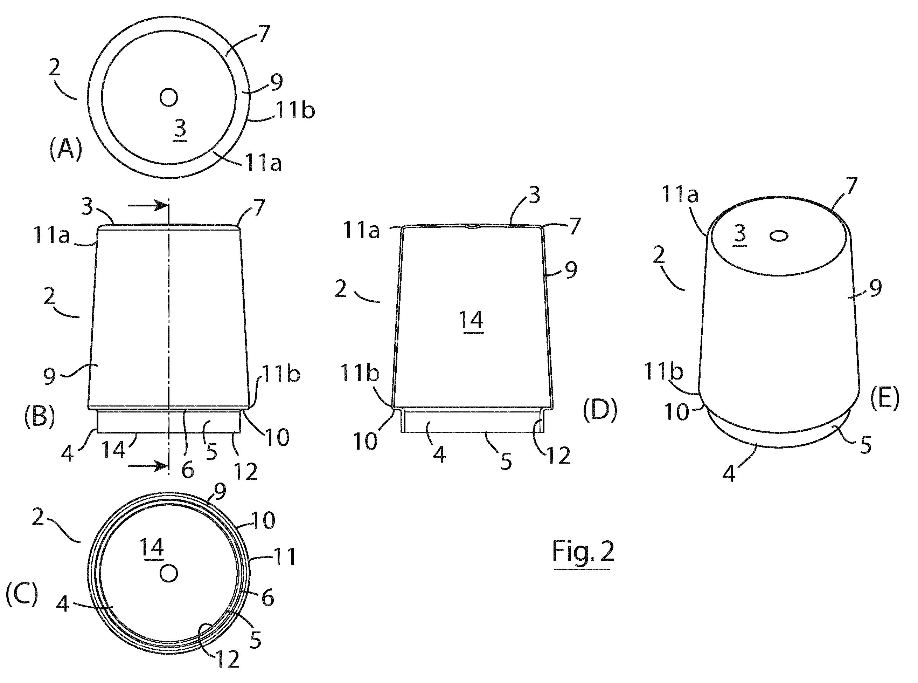

As illustrated in **Figure 1A****,** **1B** and **2A-E,** the body member 2 is hollow, having a closed end 3 and an open end 4. The body member 2 can be any shape, for example, cylindrical, square, triangular, or having a shape with 5 or more sides, *etc.* In the illustrated embodiment, an outer diameter 11a of the closed end 3 is narrower than an outer diameter 11b at the base of the closed end 3 (clearly seen in Figure 1A). The closed end 3 further comprises a sloping edge 7, which aids in stacking one container on another during transport and storage. The body member 2 comprises a wall 9 having a lip 10 defining an outer diameter 11a, 11b. Extending inward and downward from the lip 10 is the open end 4, which is configured to reversibly engage with the base 20. The open end 4 comprises a flange 5 having a threaded section 6 and an inner diameter 12. The threaded section 6 is situated distal the open end 4. The threaded section 6 is configured to matingly engage with the base 20 to allow for easy attachment thereto. The inner diameter 12 of the body member 2 defines a central bore 14 within which livestock is accommodated for storage and transport.

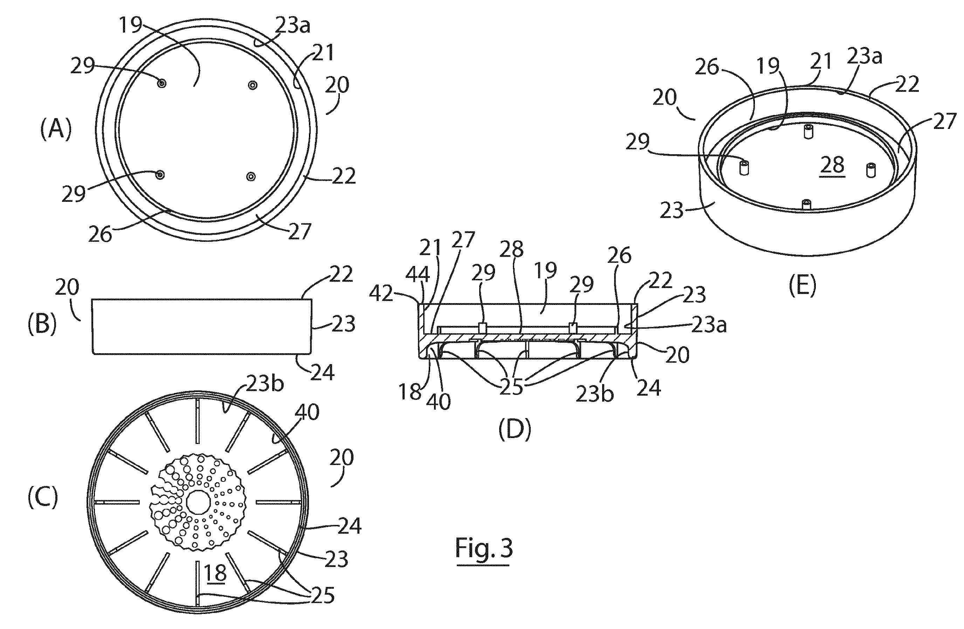

The details of the base 20 is further illustrated in **Figure 3****,** and comprises a side wall 23, at top end 22 and a bottom end 24. The top end 22 is further defined by a threaded section 21 adapted to matingly engage with the threaded section 6 of the body member 2. The threaded section 21 is situated on an inner wall 23a of the side wall 23. The side wall 23 forms an outer diameter 42, while the inner wall 23a forms an inner diameter 44 and an enclosed space 19 within which an anchoring platform 28 is fixed to the base 20. The anchoring platform 28 comprises a lip 26, located in from the inner wall 23a, and which defines the area of the anchoring platform 28. The lip 26 reaches up from the base 20 but generally does not extend above the side wall 23. Between the inner wall 23a and the lip 26 is a moat 27, which is configured to cooperate with the flange 5 of the body member 2. By doing so, the threaded sections 6 and 21 are brought into contact with each other and the body member 2 can matingly engage with the base 20. The anchoring platform 28 further comprises at least one fixing point 29 configured to secure the insert 30 in place on the base 20.

The bottom end 24 further comprises a recess 18 formed within the base 20 having an inner diameter 40. Within the hollowed recess 18, the base 20 further comprises at least one strut 25 radiating out from an inner wall 23b of the bottom end 24 and in towards the centre of the recess 18. The inner diameter 40 of the bottom end 24 of the base 20 is typically greater than the diameter of the top end 3 of the body member 2. Thus, in use while in transport or storage (or both), when stacking one container 1 on top of another, the strut 25 is adapted to engage with and grab the top end 3 of the body member 2 so as to allow a plurality of containers 1 to be stacked one on top of the other without the stack falling over.

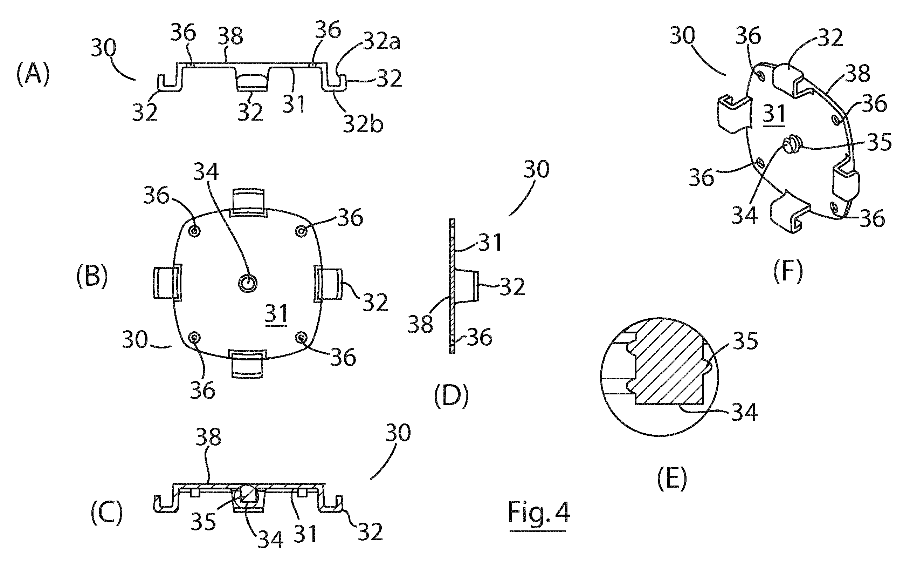

Turning now to **Figure 4A-E,** which shows the insert 30 of the container 1. The insert 30 is configured to reversibly attach to the base 20. The insert 30 comprises a stage 31 having a central fixing means 34 adapted to secure placement of the livestock 50 being transported in the container 1. The central fixing means 34 in this embodiment is a threaded screw 35. However, any mating means may be used such as a snap-fit, fasteners, etc. to secure placement of the livestock 50 in the container 1. The insert 30 further comprises at least one snap 32, which is configured to snap fit the livestock being transported in place on the insert 30. The snap 32 illustrated in **Figure 4** is generally termed a "cantilever snap-fit" and comprises a raised lip portion 32a and a receiving port 32b. The livestock 50 can also be held in place using elasticated bands or cable ties.

The stage 31 also comprises at least one aperture 36 configured to accept and lock in place the at least one fixing point 29 on the base 20, thus securing the insert 30 to the base 20. Typically, the fixing point 29 is a post having a slightly wider diameter than the diameter of the aperture 36 so that a tight fit is achieved between base 20 and the insert 30 when the fixing point 29 and the aperture 26 come together. The fixing point 29 could be any male fastening means that would cooperate with the aperture 36 (a female hub). For example, the fixing point 29 could be a snap-fit mating means, such as an annular snap-fit, that would cooperate with the aperture 36 to secure the insert 30 in place.

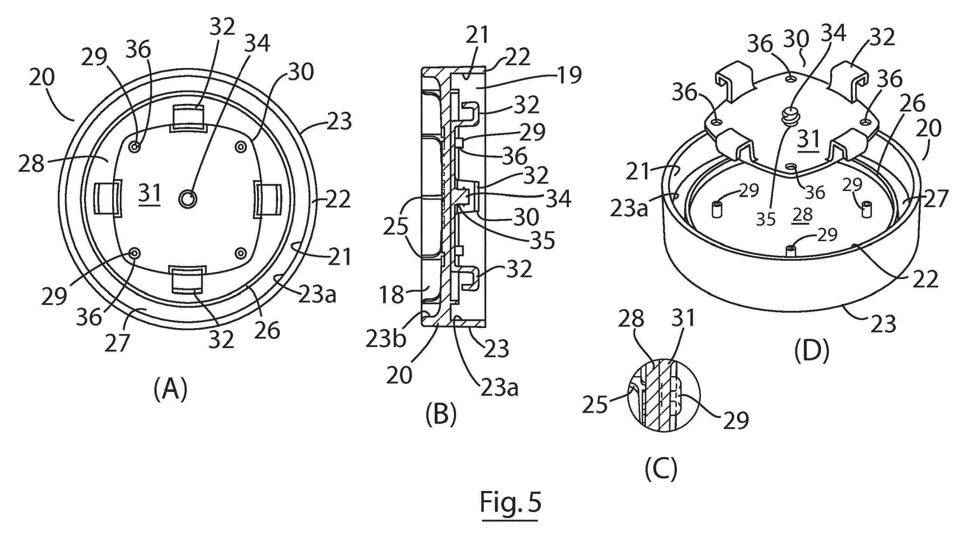

**Figure 5A** illustrates a plan view of the insert 30 locked in place on the base 20. When pressure is applied downwards on the stage 31, the fixing point 29 passes through the aperture 36 and locks the insert 30 in place on the base 20. An exploded view of the insert 30 in the base 20 is shown in **Figure 5D****.** The insert 30 is centrally located on the anchoring platform 28. A cross-section of the insert 30 secured in place on the base 20 shows that an underside 38 of the stage 31 contacts the anchoring platform 28 (see **Figure 5B**). The detail B (**Figure 5C**) shows the fixing point 29 emerging through the aperture 26 and over the stage 31 of the insert 30. The fixing point 29 may be heated to create a permanent attachment for the insert 30 into the base 20.

Optional materials could be used to allow for flexibility in the container 1, such that would allow a degree of movement in the container 1 and so cushion the livestock 50 from bumps or knocks during transport. Such materials may be silicon, rubber and poly vinyl chloride (PVC) and would absorb the energy produced by the movement.

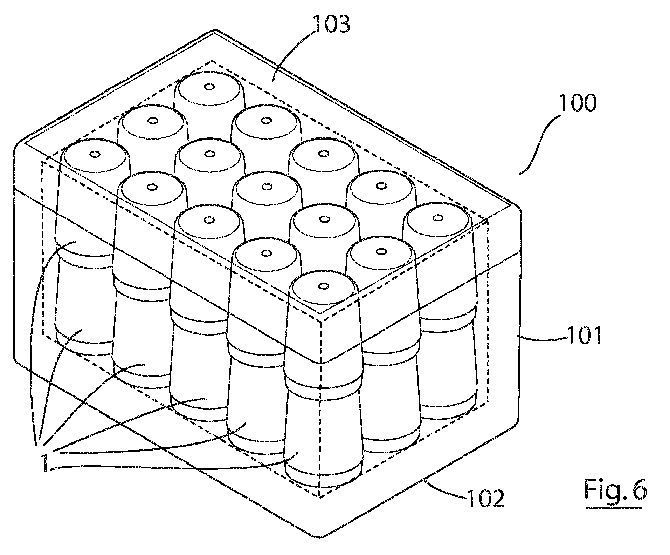

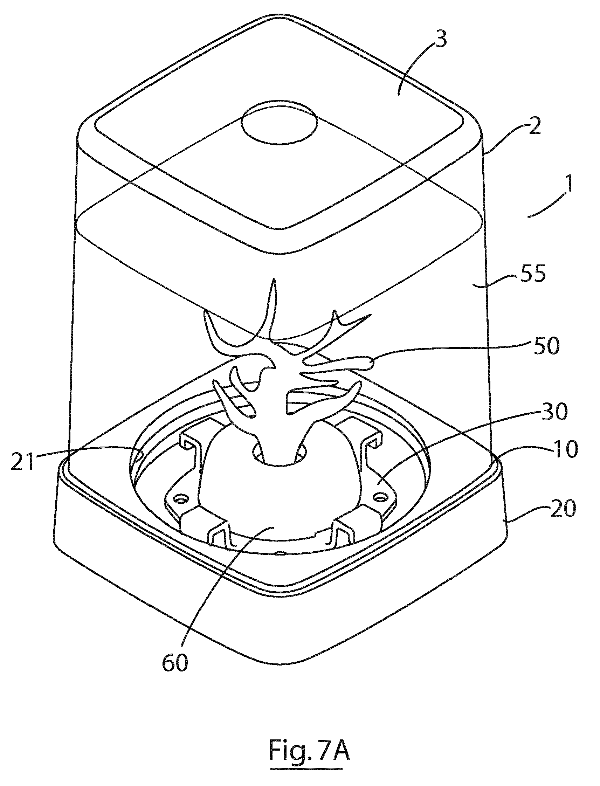

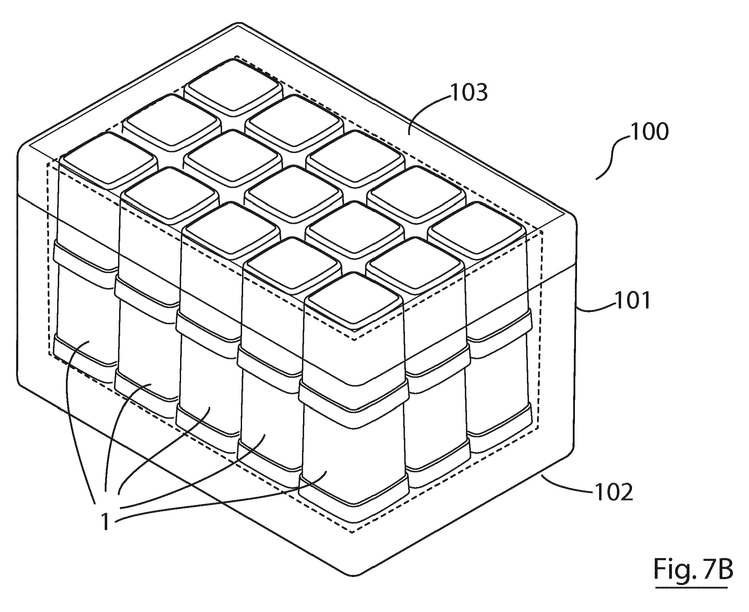

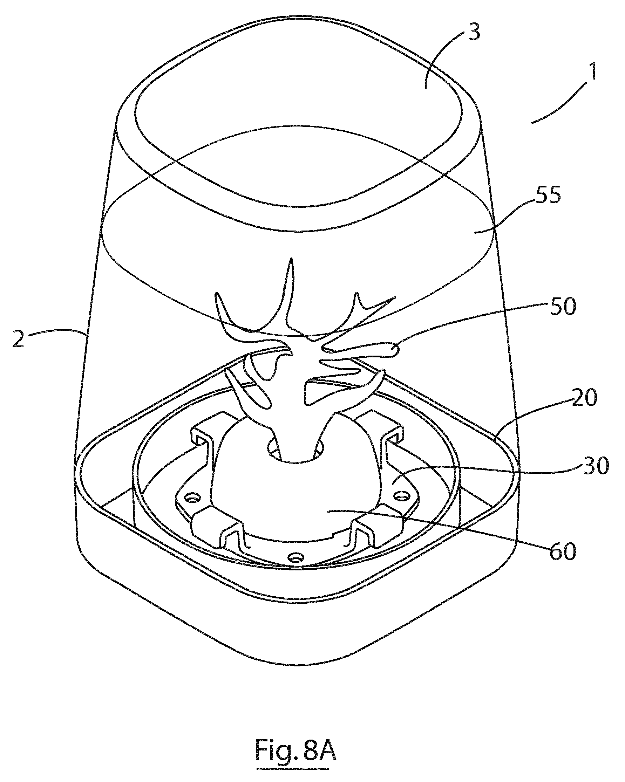

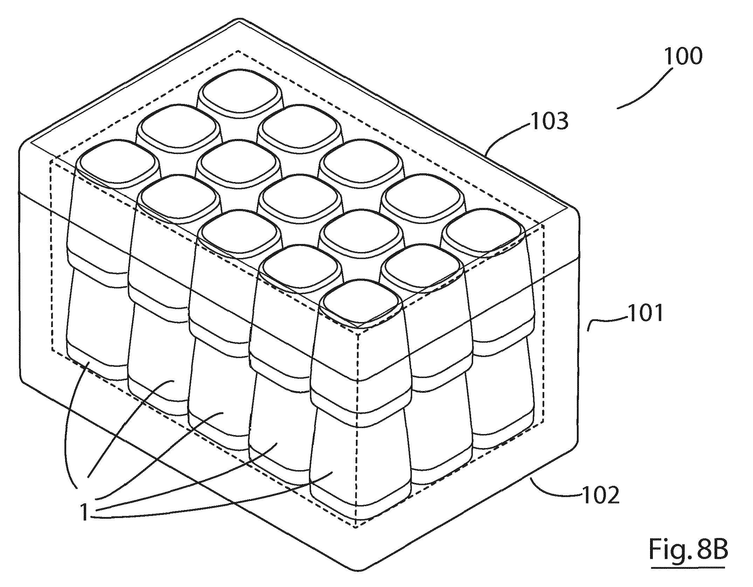

**Figure 6** shows a plurality of containers 1, as described in **Figure 1****,** that are stacked one on top of another inside a stacking container 100. The stacking container 100 comprises a side wall 101, a base 102 and a lid 103. Referring to **Figure 7A** and **7B** and **Figure 8A** and **8B**, there is illustrated a container and stacking container in which parts described with reference to the previous embodiments are assigned the same numerals. In the embodiments, a plurality of containers 1, having different shaped body members 2 and base 20, are stacked one on top of each other inside a stacking container 100. The stacking container 100 comprises a side wall 101, a base 102 and a lid 103. In the embodiment illustrated in **Figure 7A** and **7B****,** the outer diameter 42 of the base 20 is wider than the outer diameter 10 of the body member 2.

One of the advantages of the container (1) is that it holds water and air, and will withstand increases and decreases in pressure when shipped by air. Further, the container (1) will stack, allowing for maximum efficiencies in shipping boxes. The container (1) also allows for the secure transport of livestock (50) in a fluid environment.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

While the invention has been described here with reference to preferred embodiments, these have been presented by way of example only. The invention may be varied without departing from the inventive concept.

## Claims

1. A container (1) for storing and transporting livestock (50), the container (1) comprising:
a body member (2) having a closed end (3) and an open end (4), an outer diameter (11a, 11b) and an inner diameter (12);
a base (20) comprising a top end (22), a bottom end (24) and a side wall (23) configured to matingly engage with the body member (2); and
an insert (30) adapted to be secured to the base (20);
wherein the insert (30) acts as an anchor for livestock (50) in the container (1).

2. The container (1) of Claim 1, in which the open end (4) further comprises a flange (5) and a threaded section (6) adapted to matingly engage with the base (20).

3. The container (1) of Claim 1 or Claim 2, in which the bottom end (24) further comprises at last one strut (25) radiating out from an inner wall (23b) of a recess (18) in the bottom end (24).

4. The container (1) according to Claim 3, in which the strut (25) is adapted to engage with the top end (3) of a container (1).

5. The container (1) according to any one of the preceding Claims, in which the base (20) further comprises a threaded section (21) adapted to matingly engage with the body member (2).

6. The container (1) according to any one of the preceding Claims, in which the base (20) further comprises an anchoring platform (28) and at least one fixing point (29) configured to secure the insert (30) in place.

7. The container (1) according to Claim 6, in which the anchoring platform (28) is defined by a space (19) enclosed by an inner wall (23a) having a lip (26); and in which the at least one fixing point (29) is optionally positioned within the space (19).

8. The container (1) according to any one of Claims 6 or 7, in which the base (20) further comprises a moat (27) defined by an area situated between the side wall (23) and the inner wall (23a).

9. The container (1) according to Claim 8, in which the moat (27) cooperates with the flange (5) of the body member (2).

10. The container (1) according to any one of the preceding claims, in which the insert (30) comprises a stage (31) having at least one aperture (36), at least one snap (32) and a central fixing means (34).

11. The container (1) according to Claim 10, in which the central fixing means (34) and the at least one snap (32) are configured to engage with a holder (60).

12. The container (1) according to Claim 11, in which the holder (60) is adapted to secure the livestock (50) in the container (1).

13. The container (1) according to any one of the preceding claims, wherein an outer diameter (42) of the base (20) is less than the outer diameter (11b) of the body member (2).

14. The container (1) according to any one of Claims 1 to 12, wherein an outer diameter (42) of the base (20) is greater than the outer diameter (11b) of the body member (2).

15. The container (1) according to any one of the preceding claims, in which the livestock (50) is selected from fish, coral, invertebrates, marine plants, brackish plants, freshwater plants that are suitable for culturing in an aquarium.
